# EUROPÄISCHE PATENTSCHRIFT

(11) **EP 3 325 830 B1**
(45) Veröffentlichungstag und Bekanntmachung des Hinweises auf die Patenterteilung: **15.07.2020**
(21) Anmeldenummer: 16741312.9
(22) Anmeldetag: 20.07.2016
(51) Int. Cl.: F16C 33/20, F16C 33/10, F16C 37/00

(54) **GLEITLAGERVORRICHTUNG**
SLIDING BEARING DEVICE
DISPOSITIF DE PALIER À GLISSEMENT

(30) Priorität: 21.07.2015 DE 102015111788
(43) Veröffentlichungstag der Anmeldung: 30.05.2018
(73) Patentinhaber: Deutsches Zentrum für Luft- und Raumfahrt e.V., 51147 Köln (DE)
(72) Erfinder: HABERZETTL, Andreas, 74223 Flein (DE); HALD, Hermann, 71287 Weissach (DE); KITSCHE, Wolfgang, 74249 Jagsthausen (DE); ORTELT, Markus, 74223 Flein (DE)
(74) Vertreter: Hoeger, Stellrecht & Partner Patentanwälte mbB
(86) Internationale Anmeldenummer: PCT/EP2016/067345
(87) Internationale Veröffentlichungsnummer: WO 2017/013192

(56) Entgegenhaltungen:
- EP-A2- 0 752 538
- DE-A1- 19 519 468
- DE-B3-102011 052 000
- JP-A- 2001 271 083
- JP-A- 2002 293 665
- US-A1- 2007 232 502
- US-A1- 2008 247 693
- US-A1- 2009 087 126

## Beschreibung

Die Erfindung betrifft eine Gleitlagervorrichtung, umfassend eine Lageraufnahme mit einer ersten Gleitfläche und einen Lagerkörper mit einer zweiten Gleitfläche, wobei der Lagerkörper durch die Lageraufnahme aufgenommen ist und die erste Gleitfläche und die zweite Gleitfläche einander zugewandt sind.

Der Erfindung liegt die Aufgabe zugrunde, eine Gleitlagervorrichtung der eingangs genannten Art bereitzustellen, welche eine hohe Belastungstoleranz aufweist.

Die US 2007/0232502 A1 offenbart ein Gleitmaterial, welches einen porösen Artikel aus Harz umfasst, wobei eine Lochporosität (von verbundenen Löchern) nicht mehr als 30 Prozent beträgt und ein Schmieröl zur Imprägnierung des porösen Harzartikels vorhanden ist.

Aus der DE 195 24 510 A1 ist ein fluidgeschmiertes Gleitlager bekannt, wobei als Gleitpartner ein harter und ein weicher Werkstoff dienen. Der harte Partner besteht aus Metall und der weiche Partner besteht aus kohlenstofffaserverstärktem Kohlenstoff.

Aus der US 2,086,787 ist ein selbstschmierendes Lager bekannt.

Aus der DE 10 2008 057 428 A1 ist eine Schutzstruktur bekannt.

Aus der DE 10 2005 019 730 A1 ist ein plattenförmiger Carbonfaser-Verbundwerkstoff bekannt.

Aus der DE 29 33 942 A1 ist ein Lager für Rotoren, Wellen oder dergleichen mit zwei ineinander angeordneten relativ aufeinander drehbaren Einheiten bekannt. Jede Einheit weist eine Lagerfläche auf, welche mit der Lagerfläche der anderen Einheit in Berührung steht. Jede dieser Lagerflächen besteht aus mit Silizium imprägniertem Graphit bzw. aus Silmor.

Aus der DE 20 2012 100 865 U1 ist ein Freikolben-Motorgenerator bekannt.

Aus der DE 90 11 140 U1 ist ein aus zwei miteinander verbundenen Körpern bestehendes, elektrisch und Wärme leitendes, kohlenstoffhaltiges Gleitstück bekannt.

Aus der DE 10 2013 219 765 A1 ist ein wärmeleitfähiger, faserverstärkter Kunststoff für Elektromotorengehäuse bekannt.

Diese Aufgabe wird bei der eingangs genannten Gleitlagervorrichtung erfindungsgemäß dadurch gelöst, dass die Lageraufnahme und/oder der Lagerkörper mindestens in einem Gleitbereich, welcher die jeweilige Gleitfläche ausbildet, aus einem offenporösen Faserverbundwerkstoff hergestellt ist, dass Fasern in dem Gleitbereich so angeordnet sind, dass sie an der zugeordneten Gleitfläche in einem spitzen Winkel enden und/oder dass Fasern so angeordnet sind, dass sie parallel zu der jeweiligen Gleitfläche verlaufen.

Durch die offenporöse Struktur werden Kanäle bereitgestellt, durch welche sich die erste Gleitfläche und die zweite Gleitfläche kontrolliert und effektiv schmieren und auch kühlen lassen. Schmierfluid und/oder Kühlfluid (ein fließfähiges Medium wie ein Gas oder eine Flüssigkeit) lässt sich so führen, dass die gesamte Kontaktfläche zwischen dem Lagerkörper und der Lageraufnahme, das heißt die gesamte erste Gleitfläche und die gesamte zweite Gleitfläche beaufschlagt werden. Ein Schmierfilm wirkt dann direkt an den relevanten Reibungsstellen und es erfolgt gleichzeitig eine Kühlung direkt an den Orten der Wärmeentstehung beim Betrieb der Gleitlagervorrichtung.

Schmiermedium wird an den Gleitflächen nicht allmählich verbraucht, sondern lässt sich flächig und dabei lokal dosiert ständig zuführen.

Durch eine entsprechende flächige aktive Druckbeaufschlagung wird Spaltkavitation für Schmierfluid beziehungsweise Kühlfluid vermieden.

Das Element der Gleitlagervorrichtung, welches aus einem Faserverbundwerkstoff hergestellt ist, weist, wenn dieses keramisch oder beispielsweise aus C/C (Kohlenstoff mit Kohlenstofffasern) ist, einen geringen thermischen Ausdehnungskoeffizienten auf. (C/C weist keine thermische Ausdehnung auf.) Dadurch ergeben sich vorteilhafte Eigenschaften.

An dem offenporösen Faserverbundwerkstoff lässt sich Porosität und Permeabilität grundsätzlich einstellen und dabei auch räumlich inhomogen einstellen. Dadurch lässt sich für eine entsprechende Anwendung eine optimierte Schmierung beziehungsweise Kühlung erreichen.

Beim Einsatz eines keramischen Faserverbundwerkstoffs oder C/C lässt sich eine verbesserte Duktilität gegenüber monolithischen Keramikmaterialien erreichen, das heißt die Gefahr eines Sprödbruches ist stark verringert.

Es ergeben sich sehr gute Notlaufeigenschaften. Fasern wie Kohlenstofffasern weisen eine verringerte Verschleißanfälligkeit beispielsweise im Vergleich zu Graphit auf. Sie sorgen auch bei Trockenlauf für eine gute Gleitung zwischen Lagerkörper und Lageraufnahme.

Unter Umständen lässt sich auch ein Trockenlager ausbilden, insbesondere wenn der offenporöse Faserverbundwerkstoff C/C ist, das heißt ein offenporöser Kohlenstoffkörper mit Kohlenstofffasern ist.

Es lässt sich eine Gleitlagervorrichtung bereitstellen, welche hohen Belastungen bezüglich Drehzahl und Kräften standhält und dabei eine hohe Zuverlässigkeit mit hoher Lebensdauer bei geringen Fertigungskosten aufweist.

Eine typische mittlere Größe (Durchmesser) der Poren liegt im Bereich zwischen 5 µm und 40 µm und insbesondere zwischen 10 µm und 20 µm. Insbesondere entstehen die Poren in der offenporösen Struktur bei einem Pyrolysevorgang, bei dem eine chemische Zersetzung beispielsweise eines Harzes stattfindet.

Bei einem Ausführungsbeispiel ist es vorgesehen, dass die Fasern Kohlenstofffasern sind. Solche Kohlenstofffasern weisen gute Gleiteigenschaften auf. Grundsätzlich ist es möglich, dass nur die Lageraufnahme aus dem offenporösen Faserverbundwerkstoff hergestellt ist, dass nur der Lagerkörper entsprechend hergestellt ist, oder dass sowohl die Lageraufnahme als auch der Lagerkörper entsprechend hergestellt sind.

Der Gleitbereich ist derjenige Bereich, welcher die Gleitfläche aufweist. Es ist dabei grundsätzlich möglich, dass die Lageraufnahme beziehungsweise der Lagerkörper vollständig aus dem offenporösen Faserverbundwerkstoff ausgebildet sind, oder nur derjenige Bereich, das heißt also der Gleitbereich, welcher für die Gleiteigenschaften relevant ist.

Bei einem Ausführungsbeispiel sind die Lageraufnahme und/oder der Lagerkörper vollständig aus dem gleichen Faserverbundwerkstoff hergestellt und dadurch entsprechend auch vollständig offenporös.

Es ist auch möglich, dass die Lageraufnahme und/oder der Lagerkörper einen Trägerbereich aufweist, an welchem der Gleitbereich angeordnet ist, wobei das Material des Gleitbereichs und ein Material des Trägerbereichs verschieden sind. Die Materialien können dabei bezüglich ihrer chemischen Eigenschaften und/oder physikalischen Eigenschaften verschieden sein. Dadurch lässt sich eine Optimierung der Lageraufnahme beziehungsweise des Lagerkörpers durchführen. Beispielsweise ist der Trägerbereich so ausgebildet, dass er eine erhöhte mechanische Steifigkeit aufweist. Der Gleitbereich dient zur Optimierung der Gleiteigenschaften und insbesondere auch zur Bereitstellung von Notlaufeigenschaften. Es lässt sich so eine Optimierung der Gleitlagervorrichtung als Ganzes erreichen. Der Trägerbereich kann dabei aus einem Werkstoff hergestellt sein, welcher nicht offenporös ist beziehungsweise kein Faserverbundwerkstoff ist. Er kann aber auch offenporös hergestellt sein beziehungsweise aus einem Faserverbundwerkstoff hergestellt sein, wobei der entsprechende Werkstoff dann nicht der gleiche ist wie für den Gleitbereich.

Günstig ist es, wenn eine Fluidbereitstellungseinrichtung vorgesehen ist, durch welche ein fließfähiges Fluid und insbesondere Schmierfluid und/oder Kühlfluid Kanälen der Lageraufnahme und/oder des Lagerkörpers bereitgestellt ist, wobei die Kanäle durch die offenporöse Struktur gebildet sind und zu der jeweiligen Gleitfläche führen. Dadurch lässt sich eine flächige lokale Beaufschlagung der ersten Gleitfläche und der zweiten Gleitfläche mit Fluid erreichen. Eine Spaltkavitation wird vermieden. Es ist eine Beaufschlagung direkt an der "Reibquelle" und "Wärmequelle" erreicht.

Insbesondere ist es vorteilhaft, wenn die offenporöse Struktur so ausgebildet ist, dass Fluid und insbesondere Schmierfluid und/oder Kühlfluid der gesamten ersten Gleitfläche, welche in Gleitkontakt mit der zweiten Gleitfläche steht, und/oder der gesamten zweiten Gleitfläche, welche in Gleitkontakt mit der ersten Gleitfläche steht, bereitstellbar ist. Dadurch wird eine optimierte Schmierung und Kühlung erreicht.

Es ist vorgesehen, dass Fasern in dem Gleitbereich so angeordnet sind, dass sie an der zugeordneten Gleitfläche in einem spitzen Winkel enden und insbesondere in einem Winkelbereich von mindestens 45° zu der Gleitfläche enden (dies entspricht einem Winkel von höchstens 45° zu einer Normalen der Gleitfläche). Dadurch stoßen die Fasern gewissermaßen auf die entsprechende Gleitfläche. Es tritt dann im Fall einer Oberflächendegradation keine Durchtrennung von tragenden Fasersträngen auf. Lediglich Faserenden degradieren, was strukturell unkritisch ist. Die auf die Gleitfläche auftretenden Faserenden weisen "Schmierungseigenschaften" auf. Der Verschleiß ist erheblich geringer als beispielsweise der Verschleiß von Graphit. Es können alle oder nur ein Teil der Fasern wie erwähnt spitzwinklig angeordnet sein.

Es ist alternativ oder auch zusätzlich möglich, dass Fasern so angeordnet sind, dass sie parallel zu der jeweiligen Gleitfläche an der Gleitfläche verlaufen. Auch dadurch wird im Fall einer Oberflächendegradation ein Durchtrennen von tragenden Fasersträngen vermieden. Es ergeben sich gute Gleiteigenschaften. Es können alle oder nur ein Teil der Fasern wie erwähnt parallel ausgerichtet sein.

Bei einem Ausführungsbeispiel ist es vorgesehen, dass an der Lageraufnahme und/oder dem Lagerkörper eine Wärmeableitungseinrichtung angeordnet ist, welche insbesondere aus einem Material mit metallischer Wärmeleitfähigkeit hergestellt ist, und dass Fasern zu der Wärmeableitungseinrichtung führen, wobei insbesondere diese Fasern Pechfasern sind. Es lässt sich dadurch von einer Reibfläche zwischen der Lageraufnahme und dem Lagerkörper optimiert Wärme abführen. Die Wärmeableitungseinrichtung, welche beispielsweise aus Kupfer hergestellt ist, sorgt für eine entsprechende gute Wärmeabfuhr. Pechfasern sind Kohlestofffasern, welche auf der Grundlage von Pech als Precursor hergestellt sind. Sie weisen eine sehr hohe Wärmeleitfähigkeit auf. Durch sie lässt sich dann zusätzlich zu den oben beschriebenen Vorteilen optimiert Wärme von einer Reibfläche wegführen.

Günstig ist es, wenn die Wärmeableitungseinrichtung aufgalvanisiert ist und insbesondere an einem Bereich so aufgalvanisiert ist, welcher von der entsprechenden Gleitfläche beabstandet ist. Durch eine Aufgalvanisierung lassen sich Wärmebrücken, welche für eine Wärmeableitung störend sind, weitgehend vermeiden.

Bei einem Ausführungsbeispiel weist die Lageraufnahme und/oder der Lagerkörper eine Mehrzahl von Ringsegmenten oder Scheibensegmenten auf, welche miteinander verbunden sind, wobei insbesondere ein Ringsegment und ein Scheibensegment mittels einer oder mehreren Lagen eines Gewebes oder Gewirkes oder Geleges hergestellt sind. Es lässt sich so auf einfache Weise ein Lagerkörper beispielswiese in Form einer Welle (wobei dann insbesondere Scheibenelemente vorgesehen sind) oder eine Lageraufnahme in Form einer Hülse (wobei dann Ringelemente vorgesehen sind) herstellen. Es lässt sich insbesondere so auf einfache Weise erreichen, dass Fasern an die entsprechende Gleitfläche in einem spitzen Winkel enden, das heißt an die Gleitfläche stoßen.

Ein besonders vorteilhafter Faserverbundwerkstoff ist C/C. Der entsprechende Werkstoff ist offenporös mit einer Kohlenstoffphase, in welche Kohlenstofffasern eingebettet sind. Dieser Werkstoff weist keine Wärmeausdehnung auf. Er weist keine Schmelzphase auf. Es lässt sich dadurch insbesondere ein Trockenlager realisieren beziehungsweise eine entsprechende Gleitlagervorrichtung weist sehr gute Notlaufeigenschaften auf. Dadurch, dass bei C/C keine Schmelzphase vorhanden ist, tritt bei einer Degradation beispielsweise ein Abplatzen auf, wodurch sichergestellt ist, dass keine Lagerblockade oder dergleichen auftritt.

Es ist auch möglich, dass der Faserverbundwerkstoff ein keramischer Faserverbundwerkstoff ist (CMC-Werkstoff) oder ein metallischer Werkstoff mit Fasern ist. Bei einem keramischen Faserverbundwerkstoff sind entsprechend die Fasern in eine Keramikmatrix eingebettet. Bei einem metallischen Werkstoff sind die Fasern in eine poröse metallische Matrix eingebettet.

Es kann dabei vorgesehen sein, dass die Lageraufnahme und/oder der Lagerkörper so ausgebildet ist, dass längs mindestens einer Richtung die Offenporosität und/oder eine Dicke der Lageraufnahme und/oder die Dicke des Lagerkörpers variiert, so dass insbesondere unterschiedliche Durchströmungseigenschaften für ein Fluid eingestellt sind. Durch eine räumlich variierende Einstellung der Offenporosität beziehungsweise Permeabilität lässt sich gezielt die Beaufschlagung der ersten Gleitfläche und zweiten Gleitfläche mit Schmierungsfluid und/oder Kühlfluid einstellen.

Beispielsweise ist der Lagerkörper eine Welle und die Lageraufnahme ist eine Wellenaufnahme und/oder die Lageraufnahme ist ein Ringelement und der Lagerkörper ist eine Stange, oder der Lagerkörper ist eine Lagerkugel und die Lageraufnahme ist eine Lagerschale. Die Welle kann dabei grundsätzlich eine Außenwelle oder eine Innenwelle sein. Auch andere Konstellationen sind vorstellbar.

Eine erfindungsgemäße Gleitlagervorrichtung lässt sich insbesondere dann einsetzen, wenn hohe Drehzahlen beziehungsweise hohe Kraftbelastungen auftreten. Beispielsweise wird eine erfindungsgemäße Gleitlagervorrichtung für eine Turbopumpe und dort insbesondere für die Lagerung eines entsprechenden Schaufelblatts verwendet. Eine erfindungsgemäße Gleitlagervorrichtung lässt sich auch auf vorteilhafte Weise in einer Turbine einsetzen. Sie kann beispielsweise auch eingesetzt werden im Zusammenhang mit einem Freikolben-Linearmotor, um eine linearbewegliche Kolbeneinrichtung zu lagern.

Die nachfolgende Beschreibung bevorzugter Ausführungsformen dient im Zusammenhang mit den Zeichnungen der näheren Erläuterung der Erfindung. Es zeigen:
- Figur 1: eine schematische Explosionsdarstellung eines Ausführungsbeispiels einer erfindungsgemäßen Gleitlagervorrichtung in Schnittdarstellung;
- Figur 2: eine Teilschnittdarstellung eines Ausführungsbeispiels einer Lageraufnahme für eine Welle in perspektivischer Ansicht;
- Figur 3: eine schematische Darstellung eines Ausführungsbeispiels einer Lageraufnahme für eine Welle als Lagerkörper;
- Figur 4: schematisch Teilschritte eines Herstellungsverfahrens für eine Lageraufnahme;
- Figur 5: eine Schnittansicht eines weiteren Ausführungsbeispiels einer erfindungsgemäßen Gleitlagervorrichtung;
- Figur 6: eine Schnittansicht längs der Linie 6-6 gemäß Figur 5;
- Figur 7: eine schematische Schnittansicht eines weiteren Ausführungsbeispiels einer erfindungsgemäßen Gleitlagervorrichtung;
- Figur 8: eine Schnittansicht längs der Linie 8-8 gemäß Figur 7;
- Figur 9: eine ähnliche Ansicht der Gleitlagervorrichtung gemäß Figur 7 in einer Kippstellung;
- Figur 10: eine Teilschnittansicht eines weiteren Ausführungsbeispiels einer erfindungsgemäßen Gleitlagervorrichtung; und
- Figur 11: eine Ansicht eines weiteren Ausführungsbeispiels einer erfindungsgemäßen Gleitlagervorrichtung.

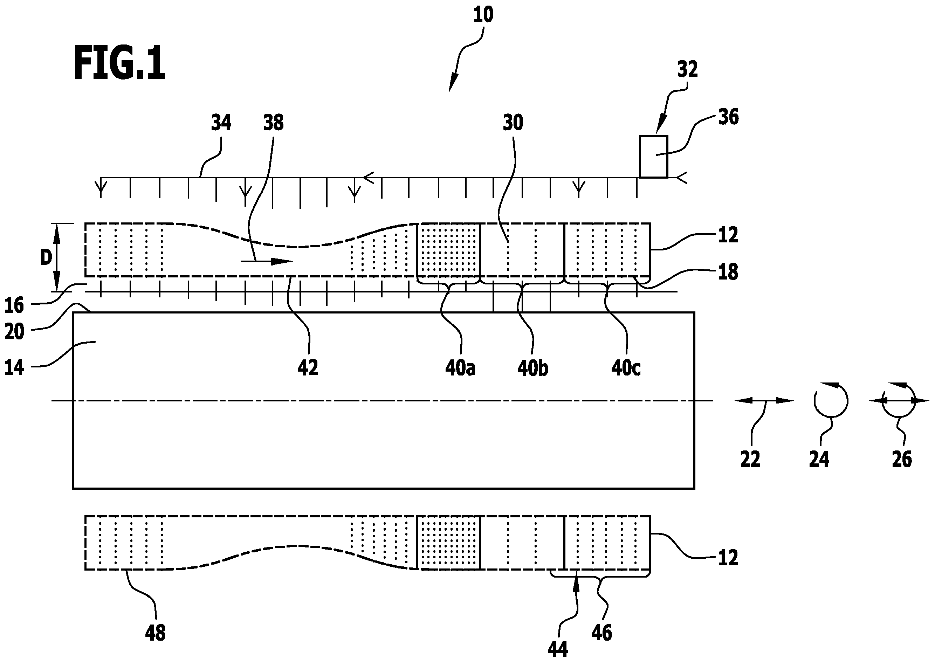

Ein erstes Ausführungsbeispiel einer erfindungsgemäßen Gleitlagervorrichtung, welches in Figur 1 schematisch in einer Explosions-Schnittansicht gezeigt und dort mit 10 bezeichnet ist, umfasst eine Lageraufnahme 12 und einen Lagerkörper 14. Die Lageraufnahme 12 nimmt den Lagerkörper 14 auf.

Bei dem gezeigten Ausführungsbeispiel ist die Lageraufnahme 12 als Hülse ausgebildet, welche einen (hohl-)zylindrischen Innenraum 16 aufweist. Der Innenraum 16 ist durch eine erste Gleitfläche 18 der Lageraufnahme 12 begrenzt. Die erste Gleitfläche 18 bildet dem Lagerkörper 14 zugewandt eine Oberfläche der Lageraufnahme 12.

Der Lagerkörper 14 ist als Stange ausgebildet und in dem Innenraum 16 gelagert.

Bei einem Ausführungsbeispiel ist der Lagerkörper 14 als zylindrische Stange ausgebildet.

Der Lagerkörper 14 weist eine zweite Gleitfläche 20 auf, welche der ersten Gleitfläche 18 zugewandt ist und diese berührt. Der Lagerkörper 14 ist in dem Innenraum 16 relativ zu der Lageraufnahme 12 beweglich, wobei die zweite Gleitfläche 20 gleitend an der ersten Gleitfläche 18 geführt ist.

Bei einer Ausführungsform ist die Gleitlagervorrichtung 10 als Gleitschiebelager ausgebildet. In diesem Falle ist der Lagerkörper 14 linear beweglich zu der Lageraufnahme 12. Dies ist in Figur 1 durch das Bezugszeichen 22 angedeutet.

Es ist beispielsweise auch möglich, dass die Gleitlagervorrichtung 10 als Rotationsgleitlagervorrichtung ausgebildet ist. In diesem Falle ist der Lagerkörper 14 als Welle ausgebildet, welche in dem Innenraum 16 relativ zu der Lageraufnahme 12 rotierbar ist oder schwenkbar ist. Dies ist in Figur 1 durch das Bezugszeichen 24 angedeutet.

Es ist auch möglich, dass die Gleitlagervorrichtung 10 als Rotations-Schiebe-Gleitlager ausgebildet ist. In diesem Falle kann der Lagerkörper 14 sowohl eine Linearbewegung als auch eine Rotationsbewegung beziehungsweise Schwenkbewegung relativ zu der Lageraufnahme 12 durchführen. Dies ist in Figur 1 durch das Bezugszeichen 26 angedeutet.

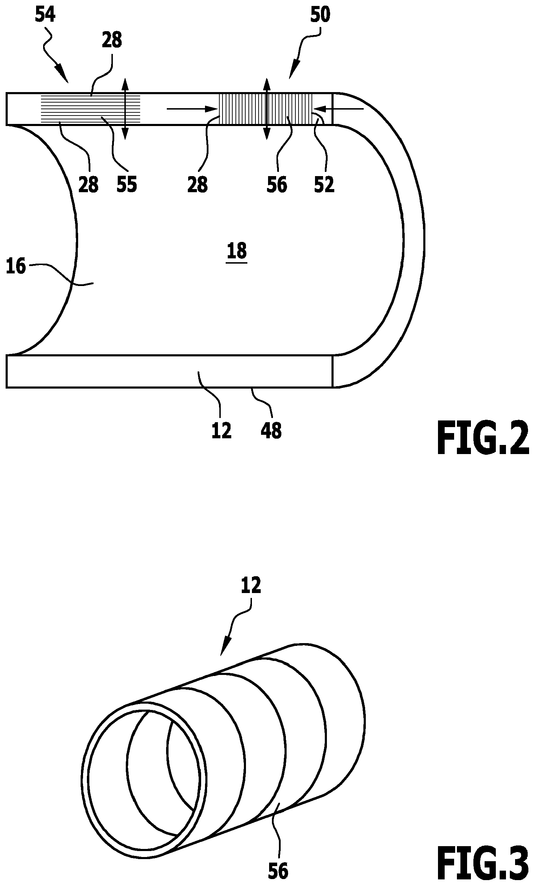

Bei der Gleitlagervorrichtung 10 ist die Lageraufnahme 12 aus einem Faserverbundwerkstoff hergestellt, welcher offenporös ist, wobei Fasern 28 im Faserverbundwerkstoff beispielsweise Kohlenstofffasern (vgl. beispielsweise Figur 2) sind.

Beispielsweise ist die Lageraufnahme 12 aus einem keramischen Faserverbundwerkstoff (CMC-Ceramic Matrix Composite) hergestellt, wobei die Fasern beispielsweise Kohlenstofffasern sind. Es ist beispielsweise auch möglich, dass der Faserverbundwerkstoff eine poröse Metallmatrix aufweist, in welcher Fasern wie Kohlenstofffasern angeordnet sind.

Bei einem Ausführungsbeispiel ist die Lageraufnahme 12 aus C/C hergestellt. Die Lageraufnahme 12 ist dann ein offenporöser Kohlenstoffkörper mit einer Kohlenstoffmatrix, in welcher Kohlenstofffasern angeordnet sind.

Die Kohlenstofffasern sind vorzugsweise gerichtet angeordnet. Die gerichtete Anordnung kann über Langfasern erfolgen und/oder durch ausgerichtete Kurzfasern.

Durch die offenporöse Struktur des Materials der Lageraufnahme 12 sind in dieser Kanäle 30 gebildet. Die Kanäle 30 laufen dabei quer durch die Lageraufnahme 12 hindurch und münden an der ersten Gleitfläche 18.

Eine typische mittlere Größe von Poren der offenporösen Struktur liegt im Bereich zwischen 5 µm (beispielsweise mit einer D10-Verteilung) und 40 µm (beispielsweise mit einer D80-Verteilung) und beispielsweise zwischen 10 µm (insbesondere D10) und 20 µm (insbesondere D80). Insbesondere werden die Poren der offenporösen Struktur durch einen Pyrolysevorgang erzeugt.

Der offenporöse Kohlenstoffkörper wird beispielsweise mit dem in der DE 10 2007 040 502 A1 beschriebenen Verfahren hergestellt, wobei insbesondere statt Kurzfasern auch Langfasern verwendet werden können. Ausgangsmaterial ist dabei eine beispielsweise angefeuchtete Pulvermischung aus Harzpulver (insbesondere eines Phenolharzes) und zellulosehaltigem Pulver wie Holzpulver. (Vorzugsweise beträgt der Feuchtegehalt in der Pulverschüttung 24,5 % bis zu 50 %.) Die Pulverschüttung wird in eine entsprechende Pressvorrichtung gebracht, wobei dann auch Kohlenstofffasern integriert werden. Es erfolgt eine Verdichtung und Aufheizung.

Es kann als Ausgangsmaterial auch eine beispielsweise flüssige Zweikomponentenmischung aus Harz und Polymermaterial als Kohlenstoffprecursor verwendet werden. Es wird entsprechend mit C-Fasern ein Vorkörper hergestellt.

Der so hergestellte Vorkörper wird anschließend pyrolysiert. Der entsprechende Grünkörper-Vorkörper wird beispielsweise unter Inertgasatmosphäre wie in einer Stickstoffatmosphäre unter Normaldruck pyrolysiert mit Maximaltemperaturen, welche zwischen 800°C und 1700°C liegen. Es entsteht dabei ein offenporöser Kohlenstoffkörper mit einer Kohlenstoff-Faserstruktur (C/C-Körper).

Eine eingesetzte Pressvorrichtung ist vorzugsweise so gewählt, dass der offenporöse Kohlenstoffkörper endkonturnah ist, das heißt dass seine Kontur mindestens näherungsweise der Lageraufnahme 12 (bzw. dem Lagerkörper 14) entspricht und der Aufwand zur Herstellung der endgültigen Lageraufnahme 12 (bzw. des endgültigen Lagerkörpers 14) aus dem Endprodukt der Pyrolyse minimiert ist.

Bei einem Ausführungsbeispiel ist eine Fluidbereitstellungseinrichtung 32 vorgesehen. Diese umfasst beispielsweise einen Verteiler 34, welcher an der Lageraufnahme 12 insbesondere an einer Seite, welche der ersten Gleitfläche 18 abgewandt ist, positioniert ist. Ferner umfasst die Fluidbereitstellungseinrichtung 32 eine Pumpeneinrichtung 36. Über die Pumpeneinrichtung 36 lässt sich Fluid dem Verteiler 34 bereitstellen und von dort durch die Kanäle 30 zu der ersten Gleitfläche 18 führen.

Durch die Fluidbereitstellungseinrichtung 32 lässt sich ein strömungsfähiges Schmierfluid beispielsweise in Gasform oder in Flüssigform der ersten Gleitfläche 18 (und damit auch der zweiten Gleitfläche 20) bereitstellen. Alternativ lässt sich ein Kühlfluid der ersten Gleitfläche 18 und damit der zweiten Gleitfläche 20 bereitstellen. Grundsätzlich ist es auch möglich, dass das Schmierfluid auch als Kühlfluid wirkt.

Es ist möglich, dass die offenporöse Struktur der Lageraufnahme 12 in (mindestens) einer Richtung 38 variiert. Die Richtung 38 ist insbesondere eine Längsrichtung, längs welcher sich die Lageraufnahme 12 erstreckt. Durch eine entsprechende variierte Ausbildung ist es möglich, eine räumlich variierende Fluidbeaufschlagung der ersten Gleitfläche 18 (und damit auch der zweiten Gleitfläche 20) längs dieser Richtung 38 zu erreichen. Die Kanalstruktur mit Kanälen 30 der Lageraufnahme 12 ist dadurch gradiert ausgebildet. Es lässt sich so eine Anpassung an eine spezielle Anwendung durchführen. Es lassen sich dadurch beispielsweise Bereiche mit mehr Fluid (insbesondere Schmierfluid) beaufschlagen als andere Bereiche.

In Figur 1 ist ein Beispiel angedeutet mit Bereichen 40a, 40b und 40c der Lageraufnahme 12, in welchen die Dichte an Kanälen 30 unterschiedlich ist. In dem angedeuteten Bereich 40a ist die Kanaldichte insbesondere bezogen auf Kanalmündungen an der ersten Gleitfläche 18 größer als in dem Bereich 40c. In dem Bereich 40c wiederum ist die Kanaldichte größer als in dem Bereich 40b.

Es ist auch möglich, beispielsweise eine Dicke D der Lageraufnahme 12 mindestens in einer Richtung (und beispielsweise in der Richtung 38) zu variieren. In Figur 1 ist ein entsprechender Bereich 42 angedeutet, in dem die Dicke nicht gleichmäßig ist.

Wenn beispielsweise in dem Bereich 42 die Dicke D kleiner ist als außerhalb dieses Bereiches, dann ist grundsätzlich dort eine effektive Kanallänge zwischen einer Einkopplungsstelle an dem Verteiler 34 und einer Auskopplungsstelle (der Mündung) an der ersten Gleitfläche 18 kürzer als außerhalb dieses Bereichs 42. In einem solchen Bereich lässt sich dann beispielsweise Fluid mit einem größeren Druck der ersten Gleitfläche 18 zuführen als außerhalb dieses Bereichs 42.

Durch entsprechende Einstellung der Kanalstruktur 30 ist eine optimierte Anpassung an Anwendungen möglich.

Es kann auch vorgesehen sein, dass die Gleitlagervorrichtung 10 eine Wärmeableitungseinrichtung 44 aufweist. Die Wärmeableitungseinrichtung 44 dient dazu, Wärme von der Gleitlagervorrichtung 10 abzuführen.

Bei einem Ausführungsbeispiel umfasst die Wärmeableitungseinrichtung 44 ein oder mehrere Elemente 46 aus einem Material mit metallischer Wärmeleitfähigkeit. Ein solches Element 46 ist beispielsweise aus Kupfer hergestellt.

Das Element 46 ist insbesondere in Wärmekontakt an der Lageraufnahme 12 außerhalb des Innenraums 16 positioniert.

Beispielsweise ist das Element 46 als galvanische Schicht an einer der ersten Gleitfläche 18 gegenüberliegenden Seite 48 der Lageraufnahme 12 positioniert. Das Element 46 ist durch Aufgalvanisierung auf die Seite 48 der Lageraufnahme 12 hergestellt.

Es ist dann insbesondere vorgesehen, dass Kohlenstofffasern von der Wärmeableitungseinrichtung 44 zu der ersten Gleitfläche 18 führen. Als Fasern 28 werden dann vorzugsweise Kohlenstofffasern mit hoher Wärmeleitfähigkeit verwendet. Beispielsweise haben Pechfasern eine hohe Wärmeleitfähigkeit, die longitudinal im Bereich zwischen 620 W/mK und 1.170 W/mK liegen. Solche hoch-wärmeleitfähigen Kohlenstofffasern werden auf Grundlage eines Pech-Precursors hergestellt.

Bezüglich Kohlenstofffasern mit hoher Wärmeleitfähigkeit wird auf die Firmeninformation "CFK-Bauteile aus hochwärmeleitenden Kohlenstofffasern" der HTS GmbH, Am Glaswerk 6, 01640 Coswig, www.htsdd.de verwiesen.

Durch Fasern 28 mit entsprechend hoher Wärmeleitfähigkeit lässt sich dann Wärme an der Gleitlagervorrichtung 10 insbesondere von dem Lagerkörper 14 und der Lageraufnahme 12 im Bereich des Innenraums 16 zu der Wärmeableitungseinrichtung 44 führen und von dort abführen.

Bei einem Ausführungsbeispiel, welches in Figur 2 mit dem Bezugszeichen 50 angedeutet ist, sind Fasern 28 so orientiert, dass sie an der ersten Gleitfläche 18 in einem spitzen Winkel 52 enden. Dieser spitze Winkel 52 ist bezogen auf die erste Gleitfläche 18 insbesondere größer als 45°. In dem in Figur 2 gezeigten Ausführungsbeispiel liegt dieser spitze Winkel 52 bei 90°, das heißt die Fasern 28 treffen mindestens näherungsweise senkrecht auf die erste Gleitfläche 18.

Es ist auch möglich (in Figur 2 angedeutet durch das Bezugszeichen 52), dass die Fasern 28 parallel zu der ersten Gleitfläche 18 liegen. In diesem Falle enden die Fasern 28 nicht an der ersten Gleitfläche 18.

Es ist grundsätzlich möglich, dass die entsprechende Lageraufnahme 12 nur Bereiche 50 aufweist, in welchen die Fasern 28 in dem spitzen Winkel 52 (welcher für unterschiedliche Fasern auch unterschiedlich sein kann) auf die erste Gleitfläche 18 treffen.

Es ist auch möglich, dass die Lageraufnahme 12 so ausgebildet ist, dass die Fasern 28 beispielsweise durch entsprechende Wicklung parallel zu der ersten Gleitfläche 28 verlaufen oder zumindest nicht auf diese treffen.

Weiterhin ist es möglich, dass die Lageraufnahme 12 unterschiedliche Bereiche 50, 54 aufweist, in denen die Faserorientierung unterschiedlich ist, wobei dann diese Bereiche 50, 54 voneinander getrennt sind.

Es ist auch möglich, dass in dem gleichen Bereich 50 beziehungsweise 54 Fasern 28 vorhanden sind, welche sowohl auf die erste Gleitfläche 18 treffen als auch Fasern vorhanden sind, welche parallel zu der ersten Gleitfläche 18 orientiert sind.

Wenn die Fasern 28 entsprechend dem Bereich 50 in einem spitzen Winkel 52 auf die erste Gleitfläche 18 treffen, dann kann auf einfache Weise auch durch Verwendung von Fasern 28 mit hoher Wärmeleitfähigkeit eine Wärmeableitung über eine Wärmeableitungseinrichtung 44 erreicht werden.

Die erfindungsgemäße Gleitlagervorrichtung 10 funktioniert wie folgt:
Der Lagerkörper 14 ist an der Lageraufnahme 12 gelagert. Der Lagerkörper 14 ist relativ zu der Lageraufnahme 12 in entsprechenden Bewegungsformen 22 oder 24 oder 26 beweglich.

Bei einem Ausführungsbeispiel erfolgt im Betrieb der Gleitlagervorrichtung 10 eine Schmierung über Schmierfluid, welches durch die Fluidbereitstellungseinrichtung 32 bereitgestellt wird. Durch die offenporöse Kanalstruktur mit den Kanälen 30 wird dieses Schmierfluid der ersten Gleitfläche 18 und damit auch der zweiten Gleitfläche 20 zugeführt.

Grundsätzlich kann eine Gleitlagervorrichtung 10 hohe Kräfte aufnehmen, da die tragende Fläche (die erste Gleitfläche 18 und die zweite Gleitfläche 20) groß ist und dadurch eine verringerte Spannung pro Flächeneinheit erreichbar ist im Vergleich beispielsweise zu Wälzlagern. Die Lagerreibung zwischen dem Lagerkörper 14 und der Lageraufnahme 12 führt zu einer Wärmeentwicklung. Über das Schmierfluid wird eine Schmierung erreicht und entstehende Wärme lässt sich abführen.

Durch die Wärmeableitungseinrichtung 44 lässt sich zusätzlich Wärme durch das Material der Lageraufnahme 12 hindurch gezielt abführen.

Es ergibt sich eine optimierte Schmierung. Diese lässt sich kontrolliert und effektiv durchführen, wobei eine Kühlung der Gleitflächen 18, 22 erreicht ist.

Insbesondere ist die Kanalstruktur so ausgebildet, dass die gesamte erste Gleitfläche 18 (welche dann die zweite Gleitfläche 20 berührt) entsprechende Kanalmündungen zur Schmiermittelversorgung aufweist.

Grundsätzlich ist die Porosität und Permeabilität der Lageraufnahme 12 mit dem offenporösen Faserverbundwerkstoff einstellbar und auch räumlich einstellbar. Dadurch ergibt sich eine optimierte Anpassbarkeit an spezielle Anforderungen.

Das Fluid (Schmierfluid, Kühlfluid) lässt sich so führen, dass die gesamte Kontaktfläche zwischen der ersten Gleitfläche 18 und der zweiten Gleitfläche 20 direkt mit dem Fluid beaufschlagt wird. Der entsprechende Schmierfilm wirkt dann direkt an der Reibungsstelle zwischen dem Lagerkörper 14 und der Lageraufnahme 12 und sorgt gleichzeitig für eine Kühlung direkt an der Wärmeentstehungsquelle.

Schmierfluid wird an der ersten Gleitfläche 18 und an der zweiten Gleitfläche 20 nicht allmählich verbraucht, sondern es wird durch das mikroporöse Material der Lageraufnahme 12 flächig und lokal zugeführt und kann dabei ständig zugeführt werden.

Wenn die Lageraufnahme 12 aus einem keramischen Faserverbundwerkstoff oder aus C/C hergestellt ist, dann ergibt sich als weiterer Vorteil, dass die Lageraufnahme 12 eine geringe thermische Ausdehnung oder keine thermische Ausdehnung (bei C/C als Material der Lageraufnahme 12) aufweist. C/C als Material für die Lageraufnahme 12 weist weiterhin eine hohe Thermoschockbeständigkeit auf. Weiterhin hat C/C keine Schmelzphase. Dadurch kann selbst bei hoher Belastung keine Blockade der Gleitlagervorrichtung 10 (der Beweglichkeit des Lagerkörpers 14 der Lageraufnahme 12) auftreten.

C/C oder faserkeramische Verbundwerkstoffe weisen weiterhin ein gutes duktiles (nicht sprödbrüchiges) Werkstoffverhalten beispielsweise im Vergleich zu monolithischen Keramikmaterialien auf.

Weiterhin ist die Dichte von C/C oder faserkeramischen Verbundwerkstoffen relativ gering beispielsweise im Vergleich zu Metallen.

Die erfindungsgemäße Gleitlagervorrichtung 10 weist gute Notlaufeigenschaften auf. Auch wenn kein Schmierfluid mehr zugeführt wird, ergibt sich eine gute Gleitpaarung.

Die Gleitlagervorrichtung 10 lässt sich beispielsweise auch als Trockengleitlager ausbilden, insbesondere wenn C/C als Werkstoff für die Lageraufnahme 12 verwendet wird.

Durch die Fasern 28 und insbesondere Kohlenstofffasern, welche parallel und/oder in dem spitzen Winkel 52 auf die erste Gleitfläche 18 auftreffen, wird eine "intrinsische" Schmierung erreicht. Der Verschleiß an den Fasern 28 ist erheblich geringer als beispielsweise bei einem Grafitmaterial.

Je nach Anwendung sind die Fasern 28 an der ersten Gleitfläche 18 parallel zu dieser orientiert und/oder stoßen in dem spitzen Winkel 52 auf die erste Gleitfläche 18.

Weiterhin lässt sich durch eine aktive flächige Druckbeaufschlagung bei einem offenporösen Faserverbundwerkstoff erreichen, dass Fluid durch die Lageraufnahme 12 hindurch ohne Spaltkavitation durchführbar ist.

Die Gleitlagervorrichtung 10 lässt sich mit hohen Belastungen (hohen Drehzahlen, hohe Kräfte) betreiben, wobei die Baugröße klein gehalten werden kann und eine hohe Zuverlässigkeit mit hoher Lebensdauer erreichbar ist, wobei die Fertigungskosten relativ gering haltbar sind.

Wenn im Betrieb der Gleitlagervorrichtung 10 eine Oberflächendegradation auftritt (in Figur 2 durch das Bezugszeichen 55 angedeutet), dann werden dadurch keine tragenden Faserstränge durchtrennt. Im Falle, dass die Fasern 28 in einem spitzen Winkel 52 auf die erste Gleitfläche 18 auftreten, degradieren lediglich Faserenden der Fasern 28, was strukturell unkritischer ist. Bei Bereichen 54 existiert eine hohe Tragfähigkeit in radialer Richtung, insbesondere wenn Lagenstapel mit Fasern 28 in axialer Richtung beim Einbau mechanisch druckvorgespannt werden, um eine Delaminierung zu verhindern. Auch in diesem Fall werden keine tragenden Faserstränge durchtrennt. Beispielsweise ist die Lageraufnahme 12 aus dem Faserverbundwerkstoff mit Kohlenstofffasern 28 hergestellt und der Lagerkörper 14 (insbesondere als Welle beziehungsweise Stange) ist aus Metall hergestellt.

Es ist beispielsweise auch möglich, dass der Lagerkörper 14 aus einem Faserverbundwerkstoff mit Fasern (beispielsweise C/C oder einem keramischen Faserverbundwerkstoff oder einem porösen Metallmaterial) hergestellt ist. Die Lageraufnahme 12 kann dann aus einem metallischen Material hergestellt sein. Es ist auch eine Paarung möglich, bei der sowohl der Lagerkörper 14 als auch die Lageraufnahme 12 aus einem Faserverbundwerkstoff mit Fasern 28 hergestellt sind.

Beispielsweise ist das Element 14 gemäß Figur 1 feststehend und das Element 12 drehbar gegenüber dem Element 14; es bildet eine Außenwelle. Bei grundsätzlich gleichem Aufbau wie in Figur 1 gezeigt ist dann der Lagerkörper aus einem porösen Faserverbundwerkstoff.

Es ist weiterhin möglich, dass bei dem Beispiel gemäß Figur 1 die Lageraufnahme 12 vollständig aus dem Faserverbundwerkstoff mit Fasern 28 hergestellt ist. Es ist aber beispielsweise auch möglich, dass ein Trägerbereich vorgesehen ist, welcher aus einem anderen Material hergestellt ist als derjenige Gleitbereich der Lageraufnahme 12, an dem die erste Gleitfläche 18 ausgebildet ist. Beispielsweise ist dann der Trägerbereich nicht faserverstärkt.

Wenn beispielsweise eine Welle aus einem Faserverbundwerkstoff mit Kohlenstofffasern vorgesehen ist, dann kann als Trägerbereich ein Kernbereich vorgesehen sein, welcher eine höhere mechanische Steifigkeit aufweist als der Gleitbereich, an dem dann die zweite Gleitfläche 20 ausgebildet ist.

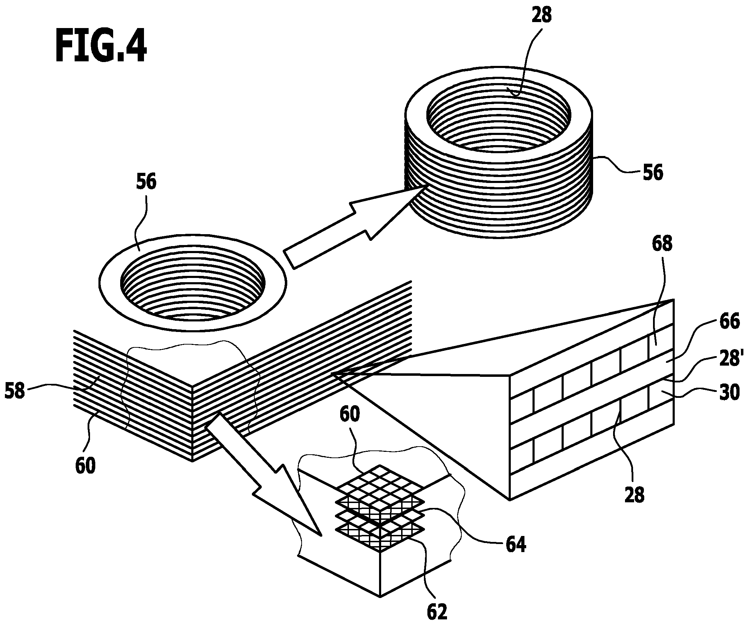

Bei einem Ausführungsbeispiel ist es vorgesehen, dass die Lageraufnahme 12 aus einer Mehrzahl von Ringsegmenten 56 (Figuren 3, 4) zusammengesetzt ist. Die Ringsegmente 56 sind miteinander verbunden. Aus solchen Ringsegmenten 56 lässt sich die Lageraufnahme 12 auf einfache Weise herstellen.

Dazu wird beispielsweise von Rovings 58 (Figur 4) ausgegangen, welche eine Mehrzahl von Lagen 60 eines Gewebes (oder Gewirkes oder Geleges) beispielsweise an Kohlenstofffasern 28 aufweist.

In den entsprechenden Lagen 60 können die Kohlenstofffasern in unterschiedlichen Orientierungen wie beispielsweise ± 45°-Lage (Bezugszeichen 62 in Figur 2) oder 0°/90° (Bezugszeichen 64 in Figur 4) orientiert sein.

Aus solch einem Lagegebilde kann dann ein Ringsegment 56 beispielsweise durch Ausstanzen hergestellt werden.

An dem Ringsegment 46 wird vor oder nach Herstellung aus der Struktur mit den Lagen 60 der Faserverbundwerkstoff hergestellt. Dazu erfolgt eine Harzimprägnierung mit entsprechender Aushärtung und nachfolgender Pyrolyse zur Herstellung der offenporösen Struktur.

Es werden dann die Ringsegmente miteinander verbunden beziehungsweise die Ringsegmente sind bereits über die Lagenstruktur miteinander verbunden.

In Figur 4 ist eine Materialstruktur 66 an einem hergestellten Ringsegment 56 über ein schematisches Schliffbild angedeutet. Es sind Fasern 28 erkennbar. Ferner sind Kanäle 30 angedeutet. Die Bereiche 68 zwischen Kanälen 30 und Kunststofffasern 28 sind beispielsweise bei einem C/C-Material durch Kohlenstoffphasen gebildet.

Durch diese Herstellung aus Ringsegmenten 56 lässt es sich beispielsweise auf einfache Weise erreichen, dass Fasern 28 in einem spitzen Winkel 52 auf die erste Gleitfläche 18 treffen.

Eine in Figur 4 angedeutete Faser 28' trifft näherungsweise senkrecht auf die erste Gleitfläche 28.

Ein Lagerkörper aus einem Faserverbundwerkstoff beispielsweise in Form einer Welle lässt sich analog aus Scheibenelementen herstellen.

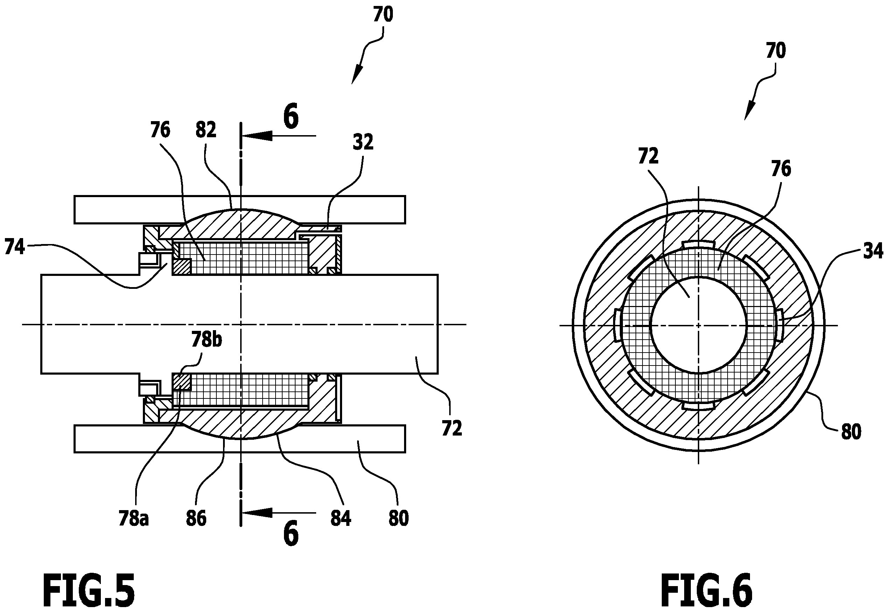

Bei einem zweiten Ausführungsbeispiel einer Gleitlagervorrichtung, welche in den Figuren 5 und 6 gezeigt und dort mit 70 bezeichnet ist, ist eine Welle 72 als Lagerkörper vorgesehen. Die Welle 72 weist einen Kragen 74 auf. Es ist weiterhin eine Hülse 76 als Lageraufnahme vorgesehen. Die Hülse 76 ist strukturell grundsätzlich gleich wie die Lageraufnahme 12 ausgebildet. Sie weist eine erste Gleitfläche auf, über welche sie die Welle 72 kontaktiert, welche eine entsprechende zweite Gleitfläche aufweist.

Die Hülse 76 ist aus einem offenporösen Faserverbundwerkstoff mit Fasern 28 hergestellt.

Es ist eine Fluidbereitstellungseinrichtung entsprechend der Fluidbereitstellungseinrichtung 32 vorgesehen.

Zwischen dem Kragen 74 und der Hülse 76 ist stirnseitig an der Hülse 76 eine Gleitflächenpaarung 78a, 78b zwischen der Hülse 76 und der Welle 72 zusätzlich zu der entsprechenden ersten Gleitfläche 18 oder der zweiten Gleitfläche 20 vorgesehen.

Auch der Gleitflächenpaarung 78a, 78b lässt sich Fluid und insbesondere Schmierfluid zuführen. Die Kanalstruktur in der Hülse 76 ist entsprechend ausgebildet, um dies zu ermöglichen.

Die Gleitlagervorrichtung 70 weist ein Gehäuse 80 auf.

Es kann dabei vorgesehen sein, dass die Struktur der Hülse 76 mit der Welle 72 an dem Gehäuse 80 über ein Schwenklager 82 gehalten wird. Das Schwenklager 82 weist beispielsweise einen konvexen sphärischen Bereich 84 auf, welcher an der Hülse 76 positioniert ist und mit dieser fest verbunden ist. Das Gehäuse 80 weist beispielsweise einen konkaven sphärischen Bereich 86 auf, in welchem der konvexe sphärische Bereich 84 gelagert ist.

Durch ein solches Schwenklager 82 kann bei Bedarf ein Momentenausgleich erreicht werden.

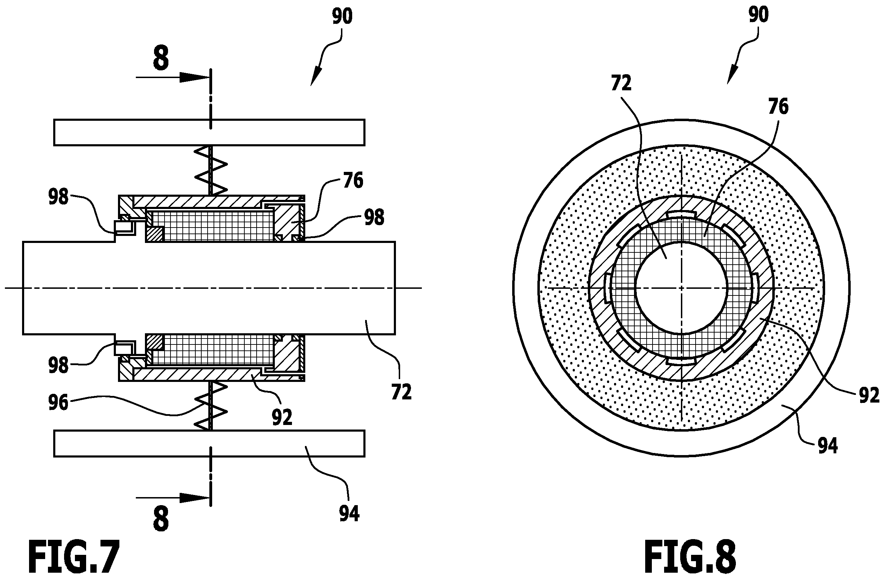

Bei einem dritten Ausführungsbeispiel einer erfindungsgemäßen Gleitlagervorrichtung, welches in den Figuren 7 bis 9 gezeigt und dort mit 90 bezeichnet ist, ist die Kombination aus Welle und Hülse gleich ausgebildet wie bei Gleitlagervorrichtung 70. Für gleiche Elemente werden gleiche Bezugszeichen verwendet.

An der Hülse 76 ist ein Träger 92 positioniert. Dieser ist insbesondere als Hülse ausgebildet.

Es ist ein Gehäuse 94 vorgesehen.

Die Hülse 76 mit der Welle 72 ist an dem Gehäuse 94 über den Träger 92 beispielsweise über eine Membraneinrichtung 96 gelagert. Durch die Lagerung der Hülse 76 an dem Gehäuse 94 über die Membraneinrichtung 96 lassen sich Zwangsmomente abfangen.

Bei der Gleitlagervorrichtung 90 ist eine Dichteinrichtung 98 vorgesehen, welche zur Abdichtung zwischen der Hülse 76 und der Welle 92 dient. Diese Dichteinrichtung 98 ist beispielsweise so ausgebildet, dass ein Blockiergas eingeblasen wird, um insbesondere den Austritt von Schmierfluid zu verhindern.

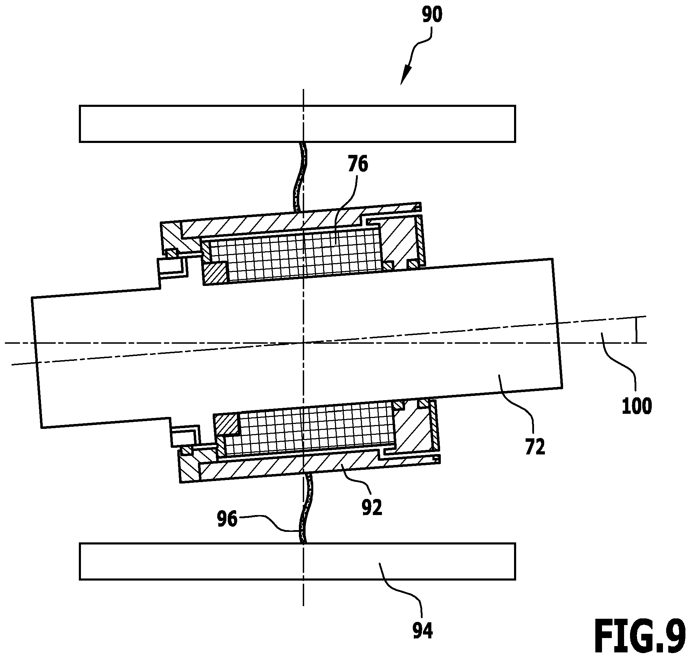

In Figur 9 ist die Gleitlagervorrichtung 90 in einer Position im Vergleich zu der Position gemäß Figur 7 gezeigt, in welcher die Hülse 76 mit der Welle 72 relativ zu dem Gehäuse 94 gekippt ist, wobei die Membraneinrichtung 96 diese Kippung erlaubt.

Die Kombination aus Hülse 76 und Welle 72 ist im Vergleich zu der Stellung gemäß Figur 7 um einen Kippwinkel 100 gekippt.

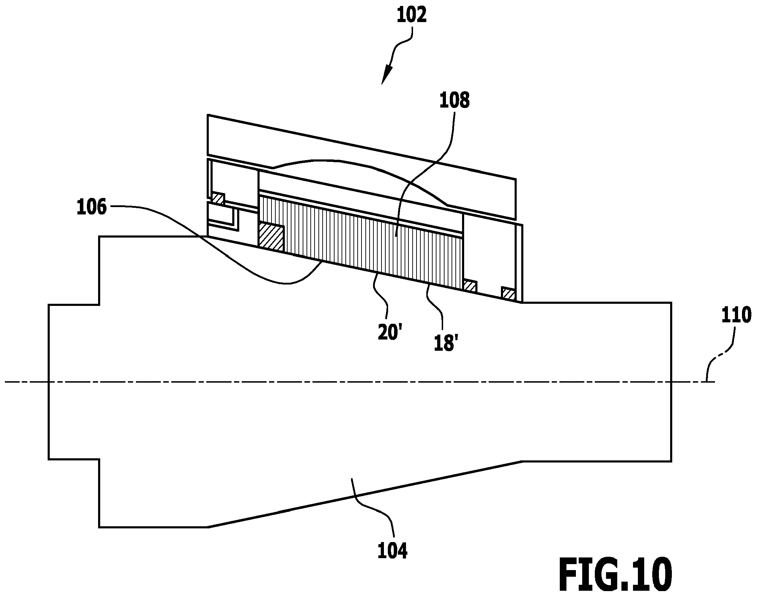

Ein weiteres Ausführungsbeispiel einer erfindungsgemäßen Gleitlagervorrichtung, welche in Figur 10 gezeigt und dort mit 102 bezeichnet ist, umfasst eine Welle 104 mit einer Schrägfläche 106. An der Schrägfläche 106 ist eine Gleitfläche entsprechend der zweiten Gleitfläche 20 ausgebildet. In Figur 10 ist diese mit 20' bezeichnet.

Der Welle 104 ist eine Hülse 108 entsprechend der Lageraufnahme 12 ausgebildet. Diese weist eine erste Gleitfläche entsprechend der ersten Gleitfläche 18 auf. In Figur 10 ist sie mit 18' bezeichnet. In der Schnittansicht gemäß Figur 10 ist nur ein Teil der Hülse 108 eingezeichnet.

Die Hülse 108 ist grundsätzlich gleich ausgebildet wie oben beschrieben. Ihr ist eine Fluidbereitstellungseinrichtung 32 zugeordnet. Es kann eine Dichteinrichtung entsprechend der Dichteinrichtung 98 bei der Gleitlagervorrichtung 90 vorgesehen sein.

Die Gleitlagervorrichtung 102 ist als Schräglager ausgebildet. Eine Rotationsachse 110 der Welle 104 liegt nicht parallel zu den Gleitflächen 18', 20', sondern die Gleitflächen 18', 20' liegen in einem Winkel zu dieser Rotationsachse 110. (Bei der Gleitlagervorrichtung 10 liegt eine Rotationsachse des Lagerkörpers 14 oder eine lineare Bewegungsrichtung des Lagerkörpers 14 parallel zu der ersten Gleitfläche 18 und der zweiten Gleitfläche 20.)

Ansonsten funktioniert die Gleitlagervorrichtung 102 wie oben beschrieben.

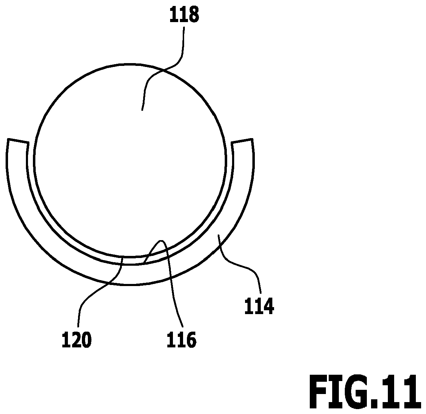

Bei einem weiteren Ausführungsbeispiel einer Gleitlagervorrichtung, welche in Figur 11 schematisch gezeigt und dort mit 112 bezeichnet ist, ist als Lageraufnahme eine Lagerschale 114 vorgesehen, welche aus einem offenporösen Faserverbundwerkstoff mit Fasern 28 hergestellt ist. Die Lagerschale 114 weist eine konkave sphärische erste Gleitfläche 16 auf.

Als Lagerkörper 118 ist ein Kugelkörper vorgesehen, welcher entsprechend sphärisch konvex ausgebildet ist. Er weist eine zweite Gleitfläche 120 auf, welche sphärisch konvex ist. Die zweite Gleitfläche 120 gleitet an der ersten Gleitfläche 116.

Solche Gleitlagervorrichtungen 112 werden beispielsweise im Zusammenhang mit Umwälzpumpen eingesetzt. In diesem Zusammenhang wird beispielhaft auf die EP 1 593 852 A1 oder die EP 2 276 934 A1 verwiesen.

Ansonsten funktioniert die Gleitlagervorrichtung 112 wie oben beschrieben.

### Bezugszeichenliste

- 10: Gleitlagervorrichtung (erstes Ausführungsbeispiel)
- 12: Lageraufnahme
- 14: Lagerkörper
- 16: Innenraum
- 18, 18': Erste Gleitfläche
- 20, 20': Zweite Gleitfläche
- 22: Linearbewegung
- 24: Rotationsbewegung
- 26: Linear-Rotations-Bewegung
- 28, 28': Fasern
- 30: Kanal
- 32: Fluidbereitstellungseinrichtung
- 34: Verteiler
- 36: Pumpeneinrichtung
- 38: Richtung
- 40a: Bereich
- 40b: Bereich
- 40c: Bereich
- 42: Bereich
- 44: Wärmeableitungseinrichtung
- 46: Element
- 48: Seite
- 50: Bereich
- 52: Spitzer Winkel
- 54: Bereich
- 55: Oberflächendegradation
- 56: Ringsegment
- 58: Roving
- 60: Lage
- 62: ± 45°-Lage
- 64: 0°/90°-Lage
- 66: Materialstruktur
- 68: Bereich
- 70: Gleitlagervorrichtung (zweites Ausführungsbeispiel)
- 72: Welle
- 74: Kragen
- 76: Hülse
- 78a: Gleitfläche
- 78b: Gleitfläche
- 80: Gehäuse
- 82: Schwenklager
- 84: Konvexer sphärischer Bereich
- 86: Konkaver sphärischer Bereich
- 90: Gleitlagervorrichtung (drittes Ausführungsbeispiel)
- 92: Träger
- 94: Gehäuse
- 96: Membraneinrichtung
- 98: Dichteinrichtung
- 100: Kippwinkel
- 102: Gleitlagervorrichtung (viertes Ausführungsbeispiel)
- 104: Welle
- 106: Schrägfläche
- 108: Hülse
- 110: Rotationsachse
- 112: Gleitlagervorrichtung (fünftes Ausführungsbeispiel)
- 114: Lagerschale
- 116: Erste Gleitfläche
- 118: Lagerkörper
- 120: Zweite Gleitfläche

## Patentansprüche

1. Gleitlagervorrichtung, umfassend eine Lageraufnahme (12) mit einer ersten Gleitfläche (18) und einen Lagerkörper (14) mit einer zweiten Gleitfläche (20), wobei der Lagerkörper (14) durch die Lageraufnahme (12) aufgenommen ist und die erste Gleitfläche (18) und die zweite Gleitfläche (20) einander zugewandt sind, **dadurch gekennzeichnet, dass** die Lageraufnahme (12) und/oder der Lagerkörper (14) mindestens in einem Gleitbereich, welcher die jeweilige Gleitfläche (18; 20) ausbildet, aus einem offenporösen Faserverbundwerkstoff hergestellt ist, dass Fasern (28) in dem Gleitbereich so angeordnet sind, dass sie an der zugeordneten Gleitfläche (18; 20) in einem spitzen Winkel (52) enden und/oder dass Fasern (28) so angeordnet sind, dass sie parallel zu der jeweiligen Gleitfläche (18; 20) verlaufen.

2. Gleitlagervorrichtung nach Anspruch 1, **dadurch gekennzeichnet, dass** die Fasern (28) des Faserverbundwerkstoffs Kohlenstofffasern sind.

3. Gleitlagervorrichtung nach Anspruch 1 oder 2, **dadurch gekennzeichnet, dass** die Lageraufnahme (12) und/oder der Lagerkörper (14) vollständig aus dem gleichen Faserverbundwerkstoff hergestellt sind.

4. Gleitlagervorrichtung nach einem der Ansprüche 1 bis 3, **dadurch gekennzeichnet, dass** die Lageraufnahme (12) und/oder der Lagerkörper (14) einen Trägerbereich aufweist, an welchem der Gleitbereich angeordnet ist, wobei das Material des Gleitbereichs und ein Material des Trägerbereichs verschieden sind.

5. Gleitlagervorrichtung nach einem der vorangehenden Ansprüche, **gekennzeichnet durch** eine Fluidbereitstellungseinrichtung (32), durch welche ein Fluid und insbesondere Schmierfluid und/oder Kühlfluid Kanälen (30) der Lageraufnahme (12) und/oder des Lagerkörpers (14) bereitgestellt ist, wobei die Kanäle (30) durch die offenporöse Struktur gebildet sind und zu der jeweiligen Gleitfläche (18; 20) führen.

6. Gleitlagervorrichtung nach einem der vorangehenden Ansprüche, **dadurch gekennzeichnet, dass** die offenporöse Struktur so ausgebildet ist, dass Fluid und insbesondere Schmierfluid und/oder Kühlfluid der gesamten ersten Gleitfläche (18), welche in Gleitkontakt mit der zweiten Gleitfläche (20) steht, und/oder der gesamten zweiten Gleitfläche (20), welche in Gleitkontakt mit der ersten Gleitfläche (18) steht, bereitstellbar ist.

7. Gleitlagervorrichtung nach einem der vorangehenden Ansprüche, **dadurch gekennzeichnet, dass** Fasern (28) in dem Gleitbereich in einem Winkelbereich von mindestens 45° zu der Gleitfläche (18; 20) enden.

8. Gleitlagervorrichtung nach einem der vorangehenden Ansprüche, **dadurch gekennzeichnet, dass** an der Lageraufnahme (12) und/oder dem Lagerkörper (14) eine Wärmeableitungseinrichtung (44) angeordnet ist, welche insbesondere aus einem Material mit metallischer Wärmeleitfähigkeit hergestellt ist, und dass Fasern (28) zu der Wärmeableitungseinrichtung (44) führen, wobei insbesondere diese Fasern Pechfasern sind, und insbesondere dass die Wärmeableitungseinrichtung (44) aufgalvanisiert ist und insbesondere an einem Bereich aufgalvanisiert ist, welcher von der entsprechenden Gleitfläche (18; 20) beabstandet ist.

9. Gleitlagervorrichtung nach einem der vorangehenden Ansprüche, **dadurch gekennzeichnet, dass** die Lageraufnahme (12) und/oder der Lagerkörper (14) eine Mehrzahl von Ringsegmenten (56) oder Scheibensegmenten aufweist, welche miteinander verbunden sind, wobei insbesondere ein Ringsegment (56) und ein Scheibensegment mittels einer oder mehrerer Lagen eines Gewebes oder Gewirkes oder Geleges hergestellt ist.

10. Gleitlagervorrichtung nach einem der vorangehenden Ansprüche, **dadurch gekennzeichnet, dass** der Faserverbundwerkstoff C/C ist.

11. Gleitlagervorrichtung nach einem der Ansprüche 1 bis 9, **dadurch gekennzeichnet, dass** der Faserverbundwerkstoff ein keramischer Faserverbundwerkstoff oder metallischer Werkstoff mit Fasern (28) ist.

12. Gleitlagervorrichtung nach einem der vorangehenden Ansprüche, **dadurch gekennzeichnet, dass** die Lageraufnahme (12) und/oder der Lagerkörper (14) so ausgebildet ist, dass längs mindestens einer Richtung (38) die Offenporosität und/oder eine Dicke der Lageraufnahme (12) und/oder des Lagerkörpers (14) variiert, so dass insbesondere unterschiedliche Durchströmungseigenschaften für ein Fluid eingestellt sind.

13. Gleitlagervorrichtung nach einem der vorangehenden Ansprüche, **dadurch gekennzeichnet, dass** der Lagerkörper (14) eine Welle ist und die Lageraufnahme (12) eine Wellenaufnahme ist und/oder dass die Lageraufnahme (12) ein Ringelement ist und der Lagerkörper (14) eine Stange ist, oder dass der Lagerkörper eine Lagerkugel (118) ist und die Lageraufnahme eine Lagerschale (114) ist.

14. Verwendung der Gleitlagervorrichtung gemäß einem der vorangehenden Ansprüche in einer Turbopumpe oder in einer Turbine oder in einem Freikolbenmotor.

## Claims

1. Sliding bearing device, comprising a bearing seating (12) having a first sliding surface (18) and a bearing body (14) having a second sliding surface (20), wherein the bearing body (14) is accommodated by the bearing seating (12) and the first sliding surface (18) and the second sliding surface (20) face each other, **characterized in that** the bearing seating (12) and/or the bearing body (14) is made of an open-pore fibre composite material at least in a sliding region which forms the respective sliding surface (18; 20), **in that** fibres (28) are arranged in the sliding region in such a way that they end at the associated sliding surface (18; 20) at an acute angle (52) and/or **in that** fibres (28) are arranged in such a way that they run parallel to the respective sliding surface (18; 20).

2. Sliding bearing device in accordance with claim 1, **characterized in that** the fibres (28) of the fibre composite material are carbon fibres.

3. Sliding bearing device in accordance with claim 1 or 2, **characterized in that** the bearing seating (12) and/or the bearing body (14) is made entirely of the same fibre composite material.

4. Sliding bearing device in accordance with any one of claims 1 to 3, **characterized in that** the bearing seating (12) and/or the bearing body (14) comprises a carrier region on which the sliding region is arranged, wherein the material of the sliding region and a material of the carrier region are different.

5. Sliding bearing device in accordance with any one of the preceding claims, **characterized by** a fluid supply device (32) by means of which a fluid, and in particular a lubricating fluid and/or a cooling fluid, is provided to channels of the bearing seating (12) and/or the bearing body (14), wherein the channels (30) are formed through the open-pore structure and lead to the respective sliding surface (18; 20).

6. Sliding bearing device in accordance with any one of the preceding claims, **characterized in that** the open-pore structure is formed in such a way that fluid, and in particular lubricating fluid and/or cooling fluid, is providable to the entire first sliding surface (18) which is in sliding contact with the second sliding surface (20), and/or to the entire second sliding surface (20) which is in sliding contact with the first sliding surface (18).

7. Sliding bearing device in accordance with sny one of the preceding claims, **characterized in that** fibres (28) in the sliding region end in an angular range of at least 45° to the sliding surface (18; 20).

8. Sliding bearing device in accordance with any one of the preceding claims, **characterized in that** a heat dissipating device (44) which is made in particular of a material having metallic thermal conductivity is arranged on the bearing seating (12) and/or the bearing body (14), and **in that** fibres (28) lead to the heat dissipating device (44) wherein, in particular, these fibres are pitch fibres, and in particular **in that** the heat dissipating device (44) is galvanized and in particular is galvanized in a region which is spaced from the corresponding sliding surface (18; 20).

9. Sliding bearing device in accordance with any one of the preceding claims, **characterized in that** the bearing seating (12) and/or the bearing body (14) comprises a plurality of ring segments (56) or disk segments which are connected to one another, in particular wherein a ring segment (56) and a disk segment are produced by means of one or more layers of a woven fabric or a knitted fabric or a non-crimp fabric.

10. Sliding bearing device in accordance with any one of the preceding claims, **characterized in that** the fibre composite material is C/C.

11. Sliding bearing device in accordance with any one of claims 1 to 9, **characterized in that** the fibre composite material is a ceramic fibre composite material or a metallic material incorporating fibres (28).

12. Sliding bearing device in accordance with any one of the preceding claims, **characterized in that** the bearing seating (12) and/or the bearing body (14) is formed in such a way that the open porosity and/or a thickness of the bearing seating (12) and/or the bearing body (14) varies along at least one direction (38) so that, in particular, differing flow properties for a fluid are established.

13. Sliding bearing device in accordance with any one of the preceding claims, **characterized in that** the bearing body (14) is a shaft and the bearing seating (12) is a shaft seating, and/or **in that** the bearing seating (12) is a ring element and the bearing body (14) is a rod, or **in that** the bearing body is a ball bearing (118) and the bearing seating is a bearing shell (114).

14. Use of the sliding bearing device in accordance with any one of the preceding claims in a turbopump or a turbine or a free piston motor.

## Revendications

1. Dispositif de palier à glissement, comprenant un logement de palier (12) avec une première surface de glissement (18) et un corps de palier (14) avec une deuxième surface de glissement (20), dans lequel le corps de palier (14) est logé à travers le logement de palier (12) et la première surface de glissement (18) et la deuxième surface de glissement (20) sont tournées l'une vers l'autre, **caractérisé en ce que** le logement de palier (12) et/ou le corps de palier (14) sont fabriqués à partir d'un matériau composite à base de fibres à pores ouverts au moins dans une zone de glissement, laquelle réalise la surface de glissement (18 ; 20) respective, **en ce que** des fibres (28) sont disposées dans la zone de glissement de telle sorte qu'elles se terminent au niveau de la surface de glissement (18 ; 20) associée en un angle aigu (52) et/ou **en ce que** des fibres (28) sont disposées de telle sorte qu'elles s'étendent de manière parallèle par rapport à la surface de glissement (18 ; 20) respective.

2. Dispositif de palier à glissement selon la revendication 1, **caractérisé en ce que** les fibres (28) du matériau composite à base de fibres sont des fibres de carbone.

3. Dispositif de palier à glissement selon la revendication 1 ou 2, **caractérisé en ce que** le logement de palier (12) et/ou le corps de palier (14) sont fabriqués en totalité à partir du même matériau composite à base de fibres.

4. Dispositif de palier à glissement selon l'une quelconque des revendications 1 à 3, **caractérisé en ce que** le logement de palier (12) et/ou le corps de palier (14) présentent une zone de support, au niveau de laquelle la zone de glissement est disposée, dans lequel le matériau de la zone de glissement et un matériau de la zone de support sont différents.

5. Dispositif de palier à glissement selon l'une quelconque des revendications précédentes, **caractérisé par** un système de fourniture de fluide (32), par lequel un fluide, et en particulier du fluide de lubrification et/ou du fluide de refroidissement, est fourni à des canaux (30) du logement de palier (12) et/ou du corps de palier (14), dans lequel les canaux (30) sont formés par la structure à pores ouverts et mènent vers la surface de glissement (18 ; 20) respective.

6. Dispositif de palier à glissement selon l'une quelconque des revendications précédentes, **caractérisé en ce que** la structure à pores ouverts est réalisée de telle sorte que du fluide, en particulier du fluide de lubrification et/ou du fluide de refroidissement, peut être fourni à l'ensemble de la première surface de glissement (18), laquelle est en contact de glissement avec la deuxième surface de glissement (20), et/ou à l'ensemble de la deuxième surface de glissement (20), laquelle est en contact de glissement avec la première surface de glissement (18).

7. Dispositif de palier à glissement selon l'une quelconque des revendications précédentes, **caractérisé en ce que** des fibres (28) se terminent dans la zone de glissement dans une plage angulaire d'au moins 45° par rapport à la surface de glissement (18 ; 20).

8. Dispositif de palier à glissement selon l'une quelconque des revendications précédentes, **caractérisé en ce qu'**est disposé au niveau du logement de palier (12) et/ou au niveau du corps de palier (14), un système de dissipation de chaleur (44), lequel est fabriqué en particulier à partir d'un matériau avec une conductivité thermique métallique, et **en ce que** des fibres (28) mènent au système de dissipation de chaleur (44), dans lequel en particulier lesdites fibres sont des fibres de brai, et en particulier **en ce que** le système de dissipation de chaleur (44) est appliqué par galvanisation et en particulier est appliqué par galvanisation au niveau d'une zone, laquelle est tenue à distance de la surface de glissement (18 ; 20) correspondante.

9. Dispositif de palier à glissement selon l'une quelconque des revendications précédentes, **caractérisé en ce que** le logement de palier (12) et/ou le corps de palier (14) présentent une multitude de segments annulaires (56) ou de segments de disque, lesquels sont reliés les uns aux autres, dans lequel en particulier un segment annulaire (56) et un segment de disque sont fabriqués au moyen d'une ou de plusieurs couches d'un tissu ou tricot ou canevas.

10. Dispositif de palier à glissement selon l'une quelconque des revendications précédentes, **caractérisé en ce que** le matériau composite à base de fibres est du C/C.

11. Dispositif de palier à glissement selon l'une quelconque des revendications 1 à 9, **caractérisé en ce que** le matériau composite à base de fibres est un matériau composite à base de fibres en céramique ou un matériau métallique avec des fibres (28).

12. Dispositif de palier à glissement selon l'une quelconque des revendications précédentes, **caractérisé en ce que** le logement de palier (12) et/ou le corps de palier (14) sont réalisés de telle sorte que le long d'au moins une direction (38), la porosité et/ou une épaisseur du logement de palier (12) et/ou du corps de palier (14) varient, de sorte qu'en particulier différentes propriétés d'écoulement traversant pour un fluide sont définies.

13. Dispositif de palier à glissement selon l'une quelconque des revendications précédentes, **caractérisé en ce que** le corps de palier (14) est un arbre et le logement de palier (12) est un logement d'arbre, et/ou **en ce que** le logement de palier (12) est un élément annulaire et le corps de palier (14) est une tige, ou **en ce que** le corps de palier est une bille de palier (118) et le logement de palier est une coquille de palier (114).

14. Utilisation du dispositif de palier à glissement selon l'une quelconque des revendications précédentes dans une turbopompe ou dans une turbine ou dans un moteur à pistons libres.
